# EUROPÄISCHE PATENTANMELDUNG

(11) **EP 1 593 860 A2**
(43) Veröffentlichungstag der Anmeldung: **09.11.2005**
(21) Anmeldenummer: 05008740.2
(22) Anmeldetag: 21.04.2005
(51) Int. Cl.: F16B 5/04, F16B 19/04, B29C 45/14, B29C 65/60, B29C 65/70, B62D 29/00

(54) **Verbundbauteil**

(30) Priorität: 04.05.2004 DE 102004021887
(71) Anmelder: LANXESS Deutschland GmbH, 51369 Leverkusen (DE)
(72) Erfinder: Dajek, Ulrich, 51375 Leverkusen (DE); Knaup, Jürgen, 50829 Köln (DE)

(57) **Zusammenfassung**

Die Erfindung beschreibt ein Verbundbauteil bestehend wenigstens aus einem Formteil (2; 2') aus Metall oder Kunststoff mit wenigstens zwei übereinander liegenden Durchbrüchen (3, 3'), welche mittels einer Nietverbindung (4) aus angespritztem thermoplastischem Kunststoff miteinander verbunden sind, wobei der Nietkopf (4) eine Sollbruchstelle (5) aufweist.

## Beschreibung

Die Erfindung betrifft ein Verbundbauteil, welches ein Formteil aus Metall oder Kunststoff mit wenigstens zwei übereinander liegenden Durchbrüchen umfasst, wobei die Durchbrüche mittels einer Nietverbindung aus angespritztem thermoplastischem Kunststoff miteinander verbunden sind.

Kunststoff-Metall-Verbundbauteile werden als Leichtbauteile beispielsweise im Fahrzeugbau eingesetzt. Derartige Verbundbauteile können z.B. Hohlkammer-Leichtbauteile sein, wie beispielsweise aus DE 198 48 516 A bekannt. Zum Verbinden der Halbschale mit der Deckplatte bzw. der Deckschale wird angespritzter thermoplastischer Kunststoff eingesetzt. Dazu weisen die Halbschale und die Deckplatte z.B. einen umlaufenden Rand auf, der mit Durchbrüchen versehen ist, an denen z.B. Nietverbindungen aus angespritztem Kunststoff angebracht sind. Alternativ oder zusätzlich können auch Sicken vorgesehen sein, an denen ebenfalls eine schubfeste, formschlüssige Verbindung mittels angespritztem Kunststoff hergestellt werden kann.

Kunststoff-Nietverbindungen als Verbindungspunkte, die zwei Formteile miteinander verbinden, werden beim Crash eines Fahrzeugs bis an ihre Festigkeitsgrenzen belastet. Die Hauptbelastung ist dabei in den meisten Fällen eine Zugscherbelastung, wobei in der Regel ein Verbindungspunkt besonders stark belastet wird. Sobald dieser Verbindungspunkt mit der höchsten Belastung durch Scherung abreißt, müssen die benachbarten Nietpunkte diese zusätzliche Belastung aufnehmen. Dies wiederum kann zum Versagen auch dieser Nietpunkte führen. Die Belastungsgrenze des Verbindungspunktes und damit auch das Energieaufnahmevermögen des Verbundbauteils wird daher wesentlich von der Dimensionierung der einzelnen Verbindungspunkte bestimmt.

Als Aufgabe der vorliegenden Erfindung sollte deshalb ein Verbundbauteil zur Verfügung gestellt werden, welches aus wenigstens einem Formteil aus Metall oder Kunststoff mit wenigstens zwei übereinander liegenden Durchbrüchen besteht, wobei die Durchbrüche durch eine Kunststoff-Nietverbindung mit einer höheren Belastbarkeit miteinander verbunden sein sollen. Im Vergleich zu einem aus dem Stand der Technik bekannten Verbundbauteil soll bei gleicher Verbindungssteifigkeit die Arbeitsaufnahme eines Verbindungspunktes in Form einer Nietverbindung bis zu seinem Versagen, insbesondere durch Abreißen, wesentlich höher sein.

Den Gegenstand der Erfindung bildet dementsprechend ein Verbundbauteil bestehend wenigstens aus einem Formteil aus Metall oder Kunststoff mit wenigstens zwei übereinander liegenden Durchbrüchen, welche mittels einer Nietverbindung aus angespritztem thermoplastischem Kunststoff miteinander verbunden sind, wobei der Nietkopf eine Sollbruchstelle aufweist.

Das erfindungsgemäße Verbundbauteil kann aus einem einzelnen Formteil oder aus mehreren Formteilen aus Metall oder Kunststoff bestehen. Die Formteile können beispielsweise Halbschalen, Platten oder Rohre sein. Die Formteile weisen mindestens zwei übereinander liegende Durchbrüche auf. Die Durchbrüche können zum Beispiel in einem Randbereich, im Flansch, der Formteile liegen, wenn beispielsweise zwei Halbschalen oder eine Halbschale mit einer Deckplatte zu einem Hohlkörper miteinander verbunden sind. Ein einzelnes Formteil kann z.B. aus einer metallischen Platte bestehen, welche zu einem röhrenförmigen Profil geformt wird.

Ein oder beide Durchbrüche können am Rand umgeformt, z.B. gebördelt, sein.

Im Spritzgießverfahren werden die Durchbrüche mit thermoplastischem Kunststoff angespritzt, so dass sie durch eine Nietverbindung miteinander verbunden werden.

Erfindungsgemäß weist der angespritzte Kunststoff-Nietkopf eine Sollbruchstelle auf. Die Sollbruchstelle ist eine Vertiefung in dem Nietkopf in beliebiger Form. Die Sollbruchstelle kann z.B. eine Kerbe, Nut oder ein Einschnitt sein. Sie kann z.B. rund, oval, dreieckig, viereckig oder kegelförmig sein. Darüber hinaus kann die Sollbruchstelle an unterschiedlichen Stellen in dem Nietkopf positioniert sein. Es können beispielsweise eine oder mehrere Kerben am Rand des Nietkopfes und/oder in der Mitte des Nietkopfes vorgesehen sein. Die Sollbruchstelle kann auch eine Vertiefung in Form einer Kerbe oder Nut entlang des Durchmessers des Nietkopfes bilden. Auch eine Kombination mehrerer geometrischer Formen der Sollbruchstelle ist möglich.

Die Zähigkeit des gewählten Nietkopfmaterials, die Wanddicke und die Festigkeit der Schalenkomponenten, d.h. der Formteile, bestimmen die optimale Geometrie des Nietkopfes und der Sollbruchstelle. Neben weiteren Einflussfaktoren haben bei gegebener Geometrie des Nietkopfes zunächst die Abmessung und dann die Form der Sollbruchstelle den größten Einfluss auf die Funktion der Sollbruchstelle.

Bevorzugt als Sollbruchstelle ist eine durchgehende Kerbe oder Nut entlang des Durchmessers des Nietkopfes.

Ist die Sollbruchstelle eine Kerbe, so beträgt der Radius im Kerbgrund bevorzugt 0 bis 2 mm, besonders bevorzugt 0,05 bis 2 mm und der Öffnungswinkel der Kerbe vorzugsweise 15 bis 100°. Unter einem Radius von 0 mm wird eine scharfkantige Kerbe verstanden.

Der tiefste Punkt der Sollbruchstelle, z.B. der Kerbgrund im Falle einer Kerbe, kann in unterschiedlicher Höhe über den Öffnungen angeordnet sein. Er liegt vorzugsweise bis maximal 4 mm über den Öffnungen. So kann z.B. bei einem flachen Nietkopf der Kerbgrund unmittelbar über den übereinander liegenden Öffnungen vorgesehen sein, während z.B. bei einem dicken Nietkopf der Kerbgrund bis zu 4 mm über den Öffnungen liegen kann.

Bei vergleichsweise spröden Kunststoffen mit einer Bruchdehnung von weniger als 10 % bedarf es allgemein einer Sollbruchstelle mit geringerer Tiefe und größerem Radius im Kerbgrund. Dabei beträgt der Radius bevorzugt 0,1 bis 2 mm. Unter einer geringeren Tiefe der Sollbruchstelle wird beispielsweise im Falle einer Kerbe eine Höhe des Kerbgrundes von 3 mm über den Öffnungen verstanden. Bei zäheren Kunststoffen hingegen wird die Wirkung der Sollbruchstelle dadurch verstärkt, dass z.B. ein geringerer Radius im Kerbgrund, insbesondere ein Radius von maximal 0,1 mm, oder gar kein Radius im Kerbgrund, d.h. eine scharfkantige Kerbe, vorgesehen ist.

Der Vorteil des erfindungsgemäßen Verbundbauteil liegt darin, dass aufgrund der Sollbruchstelle im Kunststoff-Nietkopf bei vergleichbarer Steifigkeit des Verbundbauteils eine deutlich höhere Dehnung aufgebracht werden muss, bevor der Kunststoff-Nietkopf abreißt. Bei Spannungen in einer für den Kunststoff kritischen Größe verhindert die Sollbruchstelle ein Abhebeln des gesamten Nietkopfes. Die Sollbruchstelle bewirkt ein lokales Ausbrechen des überlasteten Bereichs des Kunststoff-Nietkopfs. Weniger stark belastete Bereiche des Nietkopfs reißen nicht mit ab, sondern sichern weiterhin das Verbundbauteil. Außerdem übernehmen die Verbindungspunkte, die dem am höchsten belasteten Verbindungspunkt benachbart sind, einen größeren Anteil der eingeleiteten Kraft. Erst unter steigender Spannung gelangen schließlich auch die weniger kritisch belasteten Bereiche des Kunststoff-Nietkopfes und/oder das Formteil selbst an die Versagensgrenze.

Ein einzelner Kunststoff-Nietkopf mit Sollbruchstelle bricht etwa bei gleichem (oder etwas höherem) Lastniveau, aber nach wesentlich größerem Verformungsweg der belasteten Verbindung. Dabei entspricht die Verbindungssteifigkeit den Werten der Nietverbindung ohne Sollbruchstelle.

Bevorzugte Metalle für die Formteile sind Stahl, Nickel, Chrom, Eisen, Kupfer, Zink, Titan, Aluminium und Magnesium sowie Legierungen dieser Metalle.

Bevorzugte Kunststoffe für die Formteile sind unverstärkte, verstärkte und/oder gefüllte, thermoplastische Kunststoffe, z.B. Polycarbonat (PC), thermoplastisches Polyurethan (PU), Polyester, insbesondere Polyethylenterephthalat (PET), Polystyrol (PS), syndiotaktische Polystyrol, Acrylnitril-Butadien-Styrol (ABS), Polypropylenoxid (PPO), Polysulfon (PSO), Polyphenylensulfid (PPS), Polyimid (PI), Polyketon (PEEK), Polyamid (PA), Polybutylenterephthalat (PBT), Polypropylen (PP), Polyethylen (PE) oder eine Mischung dieser Kunststoffe.

Als thermoplastischer Kunststoff für die Nietverbindung der Formteile miteinander eignet sich insbesondere ein unverstärkter, verstärkter und/oder gefüllter Kunststoff auf Basis von Polyamid (PA), Polyester, insbesondere Polyethylenterephthalat (PET), Polybutylenterephthalat (PBT), Polystyrol (PS), syndiotaktische Polystyrol, Acrylnitril-Butadien-Styrol (ABS), Polybutylenterephthalat (PBT), thermoplastisches Polyurethan (PU), Polyolefin, insbesondere Polypropylen (PP), Polyethylen (PE), Polycarbonat (PC), Polypropylenoxid (PPO), Polysulfon (PSO), Polyphenylensulfid (PPS), Polyimid (PI), Polyetheretherketon (PEEK) oder eine Mischung dieser Kunststoffe.

Nachfolgend wird die Erfindung anhand der beigefügten Zeichnung näher erläutert.

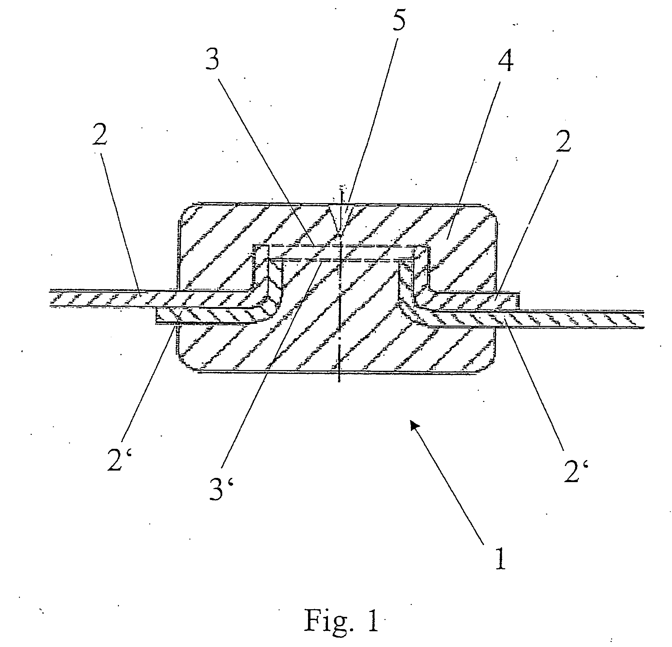

Figur 1 zeigt einen Ausschnitt aus einer Ausführungsform eines erfmdungsgemäßen Verbundbauteils 1 im Querschnitt. Zwei Formteile 2, 2' weisen je einen Durchbruch 3, 3' auf. Die Durchbrüche 3, 3' liegen übereinander. Im Bereich der Durchbrüche 3, 3' ist thermoplastischer Kunststoff angespritzt, der einen Nietkopf 4 bildet und so eine formschlüssige Verbindung der beiden Formteile 2, 2' bewirkt. Der Nietkopf 4 besitzt eine Sollbruchstelle 5 in Form einer spitzen Kerbe.

### Beispiel:

Für einen Nietkopf aus glasfaserverstärktem Polyamid mit und ohne Sollbruchstelle wurde der Kraft-Weg-Verlauf unter Zugbelastung rechnerisch ermittelt.

Einer der beiden zu vergleichenden Nietköpfe wies als Sollbruchstelle eine entlang des Durchmessers des Nietkopfes durchgehende Kerbe mit einem Öffnungswinkel von 45° und einem Radius im Kerbgrund von 0,5 mm auf. Der Kerbgrund war 0,6 mm über den Öffnungen der beiden übereinanderliegenden Formteile angeordnet.

Bei gleicher Steifigkeit und gleicher Maximalkraft zeigte der Nietkopf mit Sollbruchstelle im Vergleich zu dem Nietkopf ohne Sollbruchstelle eine Verdoppelung des Energieaufnahmevermögens bis zum endgültigen Abriss des Nietkopfes und eine Verdoppelung des Verformungsweges bis zum Versagen des Nietkopfes.

## Patentansprüche

1. Verbundbauteil bestehend wenigstens aus einem Formteil (2; 2') aus Metall oder Kunststoff mit wenigstens zwei übereinanderliegenden Durchbrüchen (3, 3'), welche mittels einer Nietverbindung (4) aus angespritztem thermoplastischem Kunststoff miteinander verbunden sind, **dadurch gekennzeichnet, dass** der Nietkopf (4) eine Sollbruchstelle (5) aufweist.

2. Verbundbauteil nach Anspruch 1, **dadurch gekennzeichnet, dass** die Sollbruchstelle (5) eine durchgehende Kerbe oder Nut entlang des Durchmessers des Nietkopfes ist.

3. Verbundbauteil nach Anspruch 2, **dadurch gekennzeichnet, dass** der Radius im Kerbgrund 0 bis 2 mm, bevorzugt 0,05 bis 2 mm, beträgt.

4. Verbundbauteil nach einem der Ansprüche 2 oder 3, **dadurch gekennzeichnet, dass** der Öffnungswinkel der Kerbe 15 bis 100° beträgt.

5. Verbundbauteil nach einem der Ansprüche 2-4, **dadurch gekennzeichnet, dass** der Kerbgrund maximal 4 mm über den Durchbrüchen angeordnet ist.
